# FASCICULE DE BREVET EUROPEEN

(11) **EP 3 217 054 B1**
(45) Date de publication et mention de la délivrance du brevet: **01.08.2018**
(21) Numéro de dépôt: 17158833.8
(22) Date de dépôt: 02.03.2017
(51) Int. Cl.: F16K 31/24, F04C 29/02

(54) **DISPOSITIF DE PURGE ET POMPE COMPRENANT CE DISPOSITIF**
ABLASSEINRICHTUNG UND PUMPE MIT DIESER EINRICHTUNG
PURGE DEVICE AND PUMP COMPRSING THIS DEVICE

(30) Priorité: 07.03.2016 FR 1651895
(43) Date de publication de la demande: 13.09.2017
(73) Titulaire: Mil'S, 69740 Genas (FR)
(72) Inventeur: GILLES, Alexis, 69360 Communay (FR)
(74) Mandataire: Delorme, Nicolas

(56) Documents cités:
- AU-A- 1 000 395
- CA-A1- 2 204 460
- FR-A1- 2 298 049

## Description

La présente invention concerne un dispositif de purge, et une pompe, notamment une pompe à vide, comprenant ce dispositif de purge.

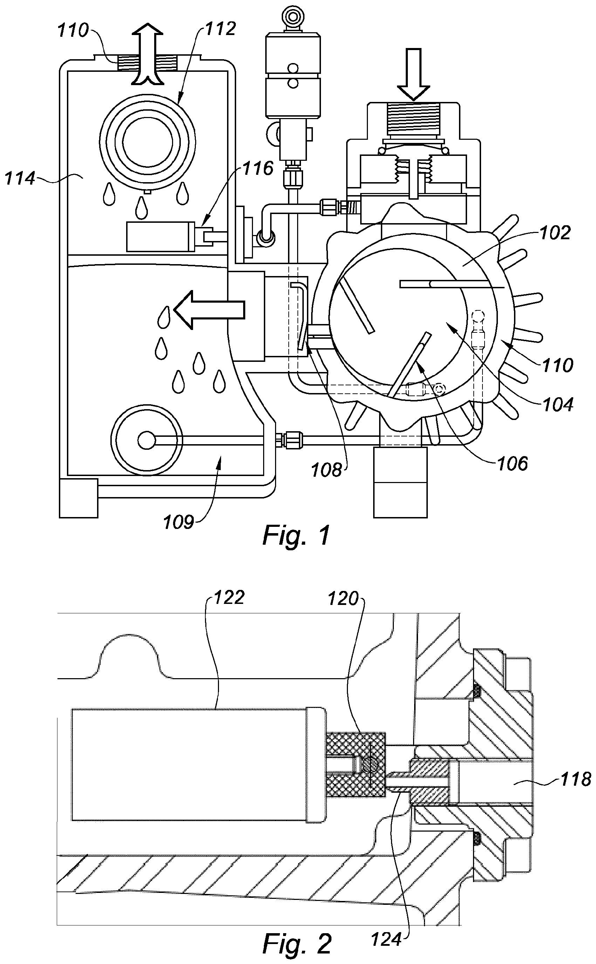

Une pompe à vide de type pompe à palettes lubrifiée, comme illustrée sur la figure 1, comprend classiquement un corps de pompe ou bâti 100 délimitant une chambre 102 d'aspiration, un rotor 104 mobile en rotation à l'intérieur de la chambre 102 d'aspiration, et une pluralité de palettes 106 mobiles en translation dans le rotor 104 et permettant, lors de la rotation du rotor 104, l'aspiration, la compression puis le refoulement de gaz dans un canal 108 de refoulement conduisant à un carter 109 d'huile. Le carter 109 d'huile délimite une réserve pour de l'huile destinée à lubrifier la pompe. Le gaz refoulé dans le carter 109 d'huile est ensuite expulsé à l'extérieur de la pompe via une ouverture 110 de sortie.

Pour éviter que de l'huile soit refoulée hors de la pompe via l'ouverture 110 de sortie, il est connu de prévoir un filtre 112 à l'entrée d'une chambre 114 du carter 109 délimitant l'ouverture 110 de sortie. La chambre 114 permet de collecter les gouttelettes d'huile qui se forment par coalescence dans le filtre 112. L'huile ainsi collectée s'accumule jusqu'à un niveau prédéterminé et est ensuite injectée dans la chambre 102 d'aspiration, par l'intermédiaire d'un dispositif 116 de purge, pour contribuer à la lubrification de la pompe. Ainsi, l'huile est en circuit fermé.

Le dispositif 116 de purge comprend traditionnellement (voir par exemple FR2298049) un conduit 118 reliant la chambre 114 du carter 109 et la chambre 104 d'aspiration, un bouchon obturateur 120 en caoutchouc, et un flotteur 122 monté mobile en rotation dans le carter 109 d'huile. Le bouchon obturateur 120 est solidaire du flotteur 122. Tant que le niveau d'huile dans la chambre 114 est inférieur au niveau prédéterminé, le bouchon obturateur 120 obture le conduit 118. Au fur et à mesure que le niveau d'huile monte, le flotteur 122 se déplace sous l'effet de la poussée d'Archimède, et pivote en entraînant le bouchon obturateur 120, ce qui libère un passage à travers le conduit 118 et permet à une partie de l'huile d'atteindre la chambre 104 d'aspiration dès que le niveau d'huile atteint le niveau d'huile prédéterminé. Lorsque le niveau d'huile redescend, le flotteur 122 pivote en sens inverse et repositionne le bouchon obturateur 120 en position d'obturation au contact d'une buse 124 agencée à l'entrée du conduit 118 (figure 2).

Il est important de préserver une étanchéité de qualité entre le bouchon obturateur 118 et le conduit 118 pour éviter une fuite susceptible d'altérer les performances de la pompe.

Or, cette étanchéité dépend notamment de l'état de surface du bouchon obturateur 118, du réglage en position de celui-ci par rapport au flotteur 122, ainsi que de la sensibilité du flotteur 122 (oscillations) aux mouvements en surface de la nappe d'huile collectée dans la chambre 114.

Ces réglages précis impliquent un montage relativement contraignant, et cette contrainte est renouvelée à chaque opération de maintenance.

Aussi, la présente invention vise à pallier tout ou partie de ces inconvénients en proposant un dispositif de purge offrant une étanchéité fiable et plus aisée à mettre en oeuvre, ainsi qu'une pompe comprenant ce dispositif de purge.

A cet effet, la présente invention a pour objet un dispositif de purge comprenant un récipient destiné à contenir un fluide, un conduit d'évacuation ayant une ouverture d'entrée débouchant à l'intérieur du récipient, un organe d'obturation agencé au-dessus de l'ouverture d'entrée et mobile entre une position d'obturation dans laquelle l'organe d'obturation obture l'ouverture d'entrée et une position de dégagement dans laquelle l'organe d'obturation libère un passage à travers l'ouverture d'entrée, et des moyens d'entraînement destinés à déplacer l'organe d'obturation en position de dégagement dès qu'un niveau de fluide à l'intérieur du récipient atteint un niveau seuil prédéterminé, dans lequel
les moyens d'entraînement comprennent un organe d'appui mobile entre une position d'entraînement dans laquelle l'organe d'appui appuie contre l'organe d'obturation de manière à basculer l'organe d'obturation en position de dégagement et une position de repos dans laquelle l'organe d'appui est à distance de l'organe d'obturation,
l'organe d'obturation étant monté libre dans le dispositif de purge de manière à revenir en position d'obturation par gravité, et dans lequel
l'organe d'obturation comprend une partie de tête, contre laquelle est destiné à venir en appui l'organe d'appui en position d'entraînement, et une partie de base positionnée contre une butée du dispositif de purge, de manière à faire basculer l'organe d'obturation en position de dégagement quand l'organe d'appui est déplacé en position d'entraînement, la partie de base présentant une section transverse supérieure à celle de la partie de tête.

Ainsi, le dispositif de purge selon l'invention offre une étanchéité fiable avec un montage simplifié. En effet, l'organe d'obturation est monté libre dans le dispositif de purge et n'est donc pas lié aux moyens d'entraînement. Le positionnement de l'organe d'obturation se fait par gravité. La forme de l'organe d'obturation, avec une base large, favorise le retour de celui-ci dans une position d'obturation correcte.

Selon un mode de réalisation préféré, la section transverse de la partie de base est décroissante en direction de la partie de tête.

Cette caractéristique contribue à limiter le risque de débordement du centre de gravité de l'organe d'obturation au-delà de la partie de base, c'est-à-dire éviter un renversement de l'organe d'obturation, quand celui-ci est basculé en position de dégagement. Cela garantit donc un retour en position d'obturation, et améliore donc la fiabilité.

Selon un mode de réalisation préféré, l'organe d'appui est monté mobile en rotation à l'intérieur du récipient autour d'un axe A de rotation et les moyens d'entraînement comprennent un flotteur rattaché à l'organe d'appui.

Cela permet de corréler de façon économique la position de l'organe d'appui au niveau de fluide présent dans le récipient.

Selon un mode de réalisation préféré, l'axe A de rotation de l'organe d'appui est positionné au droit de l'organe d'obturation.

Cette caractéristique a l'avantage d'éviter un déplacement non désiré de l'organe d'obturation en cas d'oscillations du fluide et du flotteur. Ainsi, la fiabilité de l'étanchéité offerte par l'organe d'obturation est améliorée.

Selon un mode de réalisation préféré, le dispositif de purge comprend des moyens de butée configurés pour limiter le déplacement de l'organe d'appui en position d'entraînement.

Ainsi, le risque de renversement de l'organe d'obturation, par exemple à cause d'oscillations en surface du fluide et donc du flotteur, est limité, ce qui contribue garantir le retour de l'organe d'obturation en position d'obturation.

Selon un mode de réalisation préféré, l'organe d'appui délimite un logement à l'intérieur duquel s'étend la partie de tête.

Ainsi, l'organe d'obturation est emprisonné entre l'organe d'appui et le bâti du récipient où débouche l'ouverture d'entrée. Cela évite que l'organe d'obturation soit projeté hors du logement où repose la partie de base.

Avantageusement, l'organe d'obturation est une seule et même pièce.

Selon un mode de réalisation préféré, le dispositif comprend des moyens d'étanchéité interposés entre l'organe d'obturation et l'ouverture d'entrée, et l'organe d'obturation repose sur les moyens d'étanchéité en position d'obturation.

Cela améliore l'étanchéité offerte par le dispositif de purge.

Selon un mode de réalisation préféré, l'organe d'obturation est métallique.

Un avantage de cette caractéristique est une durée de vie améliorée de l'état de surface de l'organe d'obturation, donc de l'étanchéité offerte par l'organe d'obturation.

Selon un autre aspect, l'invention a aussi pour objet une pompe comprenant un dispositif de purge ayant les caractéristiques précitées.

Cette pompe offre l'avantage d'une étanchéité fiable au niveau de son dispositif de purge, cette étanchéité étant aisée à mettre en oeuvre.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en coupe et de côté d'une pompe selon l'état de la technique,
- La figure 2 est une vue en coupe et de côté d'un dispositif de purge d'une pompe selon l'état de la technique,
- Les figures 3 et 4 sont des vues en coupe et de côté d'un dispositif de purge selon un mode de réalisation de l'invention, dont l'organe d'obturation est respectivement en position d'obturation et de dégagement,
- La figure 5 est une vue en coupe et de côté d'un organe d'obturation d'un dispositif de purge selon un mode de réalisation de l'invention.

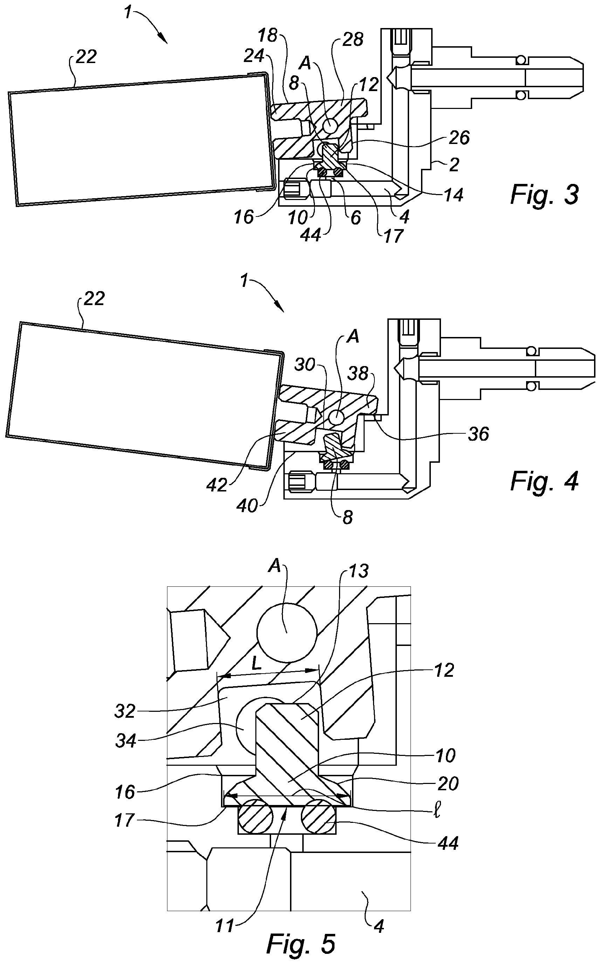

Les figures 3 et 4 montrent un dispositif 1 de purge selon un mode de réalisation de l'invention, pour une pompe de type pompe à vide, pompe à palettes lubrifiée. Le dispositif 1 de purge est par exemple destiné à équiper un carter d'huile de cette pompe.

Le dispositif 1 de purge comprend un bâti 2 formant un récipient destiné à contenir un fluide, comme de l'huile. Le bâti 2 délimite ici un conduit 4 d'évacuation destiné à évacuer au moins une partie du fluide contenu dans le récipient vers une zone prédéterminée, comme par exemple une chambre d'aspiration de la pompe.

Le conduit 4 d'évacuation délimite une ouverture 6 d'entrée débouchant à l'intérieur du récipient. La normale à la surface délimitée par l'ouverture 6 d'entrée est sensiblement verticale quand le dispositif 1 de purge est en condition d'utilisation.

Le dispositif 1 de purge comprend un organe 8 d'obturation qui est positionné au-dessus de l'ouverture 6 d'entrée. L'organe 8 d'obturation est mobile entre une position d'obturation (figure 3) dans laquelle l'organe 8 d'obturation obture de manière étanche l'ouverture 6 d'entrée et une position de dégagement (figure 4) dans laquelle l'organe 8 d'obturation libère un passage à travers l'ouverture 6 d'entrée.

L'organe 8 d'obturation peut être sensiblement cylindrique, en forme de pion. L'organe 8 d'obturation est avantageusement métallique, par exemple en laiton. De préférence, l'organe 8 d'obturation est une seule et même pièce.

Plus particulièrement, l'organe 8 d'obturation comprend une partie 10 de base et une partie 12 de tête. La partie 10 de base s'étend au-dessus de l'ouverture 6 d'entrée et est destinée à obturer l'ouverture 6 d'entrée en position d'obturation. La partie 10 de base permet à l'organe 8 d'obturation de reposer de manière stable sur l'ouverture 6 d'entrée.

Comme visible sur les figures 3 à 5, la partie 10 de base présente une face 11 inférieure plane, la face 11 inférieure recouvrant l'ouverture 6 d'entrée en position d'obturation. La partie 10 de base forme une saillie radiale par rapport à la partie 12 de tête, cette saillie radiale s'étendant avantageusement tout autour de la partie 12 de tête.

La partie 12 de tête s'étend au-dessus de la partie 10 de base. La partie 12 de tête peut être en forme de tige cylindrique.

Par ailleurs, le dispositif 1 de purge comprend aussi des moyens d'entraînement configurés pour déplacer l'organe 8 d'obturation en position de dégagement dès qu'un niveau de fluide à l'intérieur du récipient atteint un niveau seuil prédéterminé. Les moyens d'entraînement comprennent notamment un organe 18 d'appui mobile entre une position d'entraînement (figure 4) dans laquelle l'organe 18 d'appui appuie contre la partie 12 de tête de manière à faire basculer l'organe 8 d'obturation en position de dégagement, et une position de repos (figure 3) dans laquelle l'organe 18 d'appui est à distance de la partie 12 de tête pour permettre à l'organe 8 d'obturation de retrouver la position d'obturation.

Le dispositif 1 de purge comprend une butée 16 radiale configurée pour empêcher une translation de la partie 10 de base relativement à l'ouverture 6 d'entrée, et ainsi provoquer un basculement de l'organe 8 d'obturation quand l'organe 18 d'appui vient en appui contre la partie 12 de tête.

La butée 16 est par exemple formée par une paroi latérale d'un logement 14, par exemple ménagé dans le bâti 2, destiné à recevoir la partie 10 de base. Le logement 14 peut être de forme complémentaire de la paroi 10 de base. Le logement 14 est configuré pour retenir l'organe 8 d'obturation au droit de l'ouverture 6 d'entrée. L'ouverture 6 d'entrée débouche dans le logement 14. La butée 16 peut entourer la paroi 10 de base. On notera que le logement 14 peut aussi présenter un épaulement 17 s'étendant autour de l'ouverture 6 d'entrée. La paroi latérale formant butée 16 empêche un glissement de la partie 10 de base sur l'épaulement 17.

Ainsi, en position de dégagement, l'organe 8 d'obturation est soumis à un porte-à-faux (partie 10 de base bloqué par la butée 16 et partie 12 de tête poussée par l'organe 18 d'appui), si bien que l'organe 8 d'obturation est basculé, incliné.

Ainsi, en position de dégagement, la partie 12 de tête est inclinée par rapport à la verticale, et par rapport à la position que la partie 12 de tête occupait en position d'obturation. La partie 10 de base reste quant à elle dans le logement 14, et reste de préférence intégralement contenue dans le logement 14, ce qui favorise un effet d'aspiration limitant un risque de basculement de l'organe 8 d'obturation.

De préférence, la partie 10 de base est conformée pour qu'en position de dégagement, une extrémité 13 distale de la partie 12 de tête, agencée à l'opposé de la partie 10 de base, reste au droit de la partie 10 de base. L'angle de basculement de l'organe 8 d'obturation entre la position d'obturation et la position de dégagement est aussi déterminé pour que cette extrémité 13 distale s'étende à l'aplomb de la partie 10 de base quelque soit la position de l'organe 8 d'obturation. Ainsi, le centre de gravité de l'organe 8 d'obturation reste à la verticale de la partie 10 de base lors du basculement.

Il est important de noter que l'organe 8 d'obturation est monté libre à l'intérieur du dispositif 1 de purge. En particulier, l'organe 8 d'obturation n'est pas lié aux moyens d'entraînement. Ainsi, l'organe 8 d'obturation peut être rappelé en position d'obturation seulement sous l'effet de la gravité.

L'organe 8 d'obturation présente en outre une forme adaptée pour limiter un risque de renversement quand l'organe 8 d'obturation est basculé en position de dégagement par l'organe 18 d'appui.

Autrement dit, la partie 10 de base et la partie 12 de tête sont conformées pour que le centre de gravité de l'organe 8 d'obturation s'étende toujours au droit de la partie 10 de base.

La partie 10 de base et la partie 12 de tête sont en particulier conformées pour que le centre de gravité soit le plus bas possible, c'est-à-dire plus près de la face 11 inférieure qu'une d'une face supérieure opposée de l'organe 8 d'obturation.

Ainsi, la partie 10 de base est plus large que la partie 12 de tête. En particulier, la partie 10 de base présente une section transverse supérieure à celle de la partie 12 de tête. Selon l'exemple des figures 3 à 5, le diamètre de la partie 10 de base est supérieur au diamètre de la partie 12 de tête.

La partie 10 de base peut présenter une forme sensiblement tronconique, allant en se rétrécissant vers la partie 12 de tête. On notera ainsi que la section transverse de la partie 10 de base est décroissante en direction de la partie 12 de tête.

De préférence, la partie 10 de base présente une paroi latérale ayant une portion 20 convexe, ce qui contribue à abaisser le centre de gravité de l'organe 8 d'obturation. Par exemple, la paroi latérale présente sensiblement une forme de S.

Comme illustré sur les figures 3 et 4, les moyens d'entraînement peuvent aussi comprendre un flotteur 22, destiné à flotter à la surface du fluide contenu dans le récipient du dispositif 1 de purge. Ainsi, sous l'effet de la poussée d'Archimède, le flotteur 22 monte simultanément à la montée du niveau de fluide.

L'organe 18 d'appui est préférentiellement un levier monté mobile en rotation autour d'un axe A de rotation par rapport au bâti 2, à l'intérieur du récipient.

Le flotteur 22 est solidaire de l'organe 18 d'appui, et plus précisément d'une extrémité 24 proximale du levier. Ainsi, le levier pivote autour de l'axe A de rotation en fonction du niveau de fluide contenu dans le récipient. Quand le fluide atteint un niveau seuil prédéterminé, le levier vient en appui contre l'organe 8 d'obturation, bascule celui-ci en position de dégagement et permet ainsi d'évacuer le fluide via le conduit 4 d'évacuation.

Le levier présente de surcroît un bras 26 d'appui, s'étendant ici à partir d'une extrémité 28 distale opposée à l'extrémité 24 proximale, qui est la partie du levier destinée à venir en appui contre l'organe 8 d'obturation.

Le levier s'étend de préférence au-dessus de l'organe 8 d'obturation. En particulier, l'axe A de rotation est avantageusement situé au-dessus, à la verticale de l'organe 8 d'obturation. Cela permet d'éviter que des mouvements d'oscillation du levier provoquent un basculement de l'organe 8 d'obturation.

Le bras 26 d'appui peut être sensiblement orthogonal à la direction dans laquelle s'étend le levier, afin de limiter aussi les conséquences de mouvements d'oscillation du levier sur l'organe 8 d'obturation et donc l'étanchéité du dispositif 1 de purge.

De préférence, l'organe 18 d'appui, c'est-à-dire ici le levier, délimite au moins en partie un logement 30 à l'intérieur duquel s'étend l'organe 8 d'obturation, notamment la partie 12 de tête. Le bras 26 d'appui délimite ici une partie du logement 30. Cela permet d'empêcher l'organe 8 d'obturation, monté libre dans le dispositif 1 de purge, d'être expulsé du logement 14 par exemple sous l'effet d'un choc, et de garantir son retour en position d'obturation.

Le logement 30 est configuré pour empêcher l'organe 8 d'obturation de quitter de manière irréversible son emplacement. Autrement dit, l'organe 8 d'obturation est emprisonné à l'intérieur des logements 14, 30, et plus particulièrement entre le bâti 2 et le levier formant organe 18 d'appui.

Le bâti 2 peut également délimiter en partie le logement 30. Ainsi, le bâti 2 peut comprendre une ou des parois 32 destinées à fermer le logement 30 de manière à empêcher l'organe 8 d'obturation de quitter ce logement 30. La ou les parois 32 peuvent présenter une ouverture 34 de passage pour permettre au fluide contenu dans le récipient d'atteindre le logement 30 et d'être évacué le cas échéant via l'ouverture 6 d'entrée et le conduit 4 d'évacuation (figure 3).

Le logement 30 peut présenter une largeur L inférieure à la largeur l de la partie 10 de base, plus précisément inférieure au diamètre de la partie 10 de base. Cela évite que l'organe 8 d'obturation se retourne à l'intérieur du logement 30.

On notera que le dispositif 1 de purge comprend avantageusement des moyens de butée configurés pour limiter le déplacement de l'organe 18 d'appui en position d'entraînement. Par exemple, les moyens de butée comprennent une paroi 36 de butée, appartenant ici au bâti 2, et un bras 38 de butée rattaché à l'organe 18 d'appui. Le bras 38 de butée s'étend par exemple à partir de l'extrémité 28 distale. Le bras 38 de butée peut être sensiblement orthogonal au bras 26 d'appui. Les moyens de butée bloquent l'organe 18 d'appui en position d'entraînement et évitent ainsi au centre de gravité de l'organe 8 d'obturation de basculer au-delà de la partie 10 de base.

Le dispositif 1 de purge peut aussi comprendre des moyens de butée pour bloquer l'organe 18 d'appui en position de repos, comme par exemple une face 40 d'appui ménagée sur le bâti 2 et une portion 42 de butée de l'organe 18 d'appui destinée à venir en appui contre la face 40 d'appui quand l'organe 18 d'appui est en position de repos.

Le dispositif 1 de purge comprend avantageusement des moyens d'étanchéité interposés entre l'organe 8 d'obturation et l'ouverture 6 d'entrée. L'organe 8 d'obturation repose, de préférence intégralement, sur les moyens d'étanchéité en position d'obturation. Par exemple, les moyens d'étanchéité comprennent un joint 44 d'étanchéité, notamment un joint torique, s'étendant autour de l'ouverture 6 d'entrée.

L'invention concerne aussi une pompe, notamment une pompe à vide, de type pompe à palette lubrifiée, comprenant un dispositif 1 de purge tel que décrit ci-dessus. Le dispositif 1 de purge est avantageusement agencé à l'intérieur d'un carter d'huile de la pompe, à l'aval d'un filtre destiné à récolter de l'huile mêlée au gaz refoulé et à l'amont d'une ouverture de sortie par laquelle est destiné à être évacué le gaz refoulé débarrassé de cette huile. Le conduit 4 d'évacuation est avantageusement relié à une chambre d'aspiration de la pompe. Ainsi, l'huile tourne en circuit fermé à l'intérieur de la pompe.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention.

## Revendications

1. Dispositif (1) de purge comprenant un récipient destiné à contenir un fluide, un conduit (4) d'évacuation ayant une ouverture (6) d'entrée débouchant à l'intérieur du récipient, un organe (8) d'obturation agencé au-dessus de l'ouverture (6) d'entrée et mobile entre une position d'obturation dans laquelle l'organe (8) d'obturation obture l'ouverture (6) d'entrée et une position de dégagement dans laquelle l'organe (8) d'obturation libère un passage à travers l'ouverture (6) d'entrée, et des moyens d'entraînement destinés à déplacer l'organe (8) d'obturation en position de dégagement dès qu'un niveau de fluide à l'intérieur du récipient atteint un niveau seuil prédéterminé, **caractérisé en ce que** les moyens d'entraînement comprennent un organe (18) d'appui mobile entre une position d'entraînement dans laquelle l'organe (18) d'appui appuie contre l'organe (8) d'obturation de manière à basculer l'organe (8) d'obturation en position de dégagement et une position de repos dans laquelle l'organe (18) d'appui est à distance de l'organe (8) d'obturation,
l'organe (8) d'obturation étant monté libre dans le dispositif (1) de purge de manière à revenir en position d'obturation par gravité,
et **en ce que**
l'organe (8) d'obturation comprend une partie (12) de tête, contre laquelle est destiné à venir en appui l'organe (18) d'appui en position d'entraînement, et une partie (10) de base positionnée contre une butée (16) du dispositif (1) de purge, de manière à faire basculer l'organe (8) d'obturation en position de dégagement quand l'organe (18) d'appui est déplacé en position d'entraînement, la partie (10) de base présentant une section transverse supérieure à celle de la partie (12) de tête.

2. Dispositif (1) selon la revendication 1, dans lequel la section transverse de la partie (10) de base est décroissante en direction de la partie (12) de tête.

3. Dispositif (1) de purge selon la revendication 1 ou 2, dans lequel l'organe (18) d'appui est monté mobile en rotation à l'intérieur du récipient autour d'un axe (A) de rotation et les moyens d'entraînement comprennent un flotteur (22) rattaché à l'organe (18) d'appui.

4. Dispositif (1) selon la revendication 3, dans lequel l'axe (A) de rotation de l'organe (18) d'appui est positionné au droit de l'organe (8) d'obturation.

5. Dispositif (1) selon l'une des revendications 1 à 4, dans lequel le dispositif (1) de purge comprend des moyens de butée configurés pour limiter le déplacement de l'organe (18) d'appui en position d'entraînement.

6. Dispositif (1) selon l'une des revendications 1 à 5, dans lequel l'organe (18) d'appui délimite un logement (30) à l'intérieur duquel s'étend la partie (12) de tête.

7. Dispositif (1) selon l'une des revendications 1 à 6, dans lequel le dispositif (1) comprend des moyens d'étanchéité interposés entre l'organe (8) d'obturation et l'ouverture (6) d'entrée, et l'organe (8) d'obturation repose sur les moyens d'étanchéité en position d'obturation.

8. Dispositif selon l'une des revendications 1 à 7, dans lequel l'organe (8) d'obturation est métallique.

9. Pompe comprenant un dispositif (1) de purge selon l'une des revendications 1 à 8.

## Patentansprüche

1. Ablasseinrichtung (1), umfassend einen Behälter, der ausgelegt ist, um ein Fluid zu enthalten, eine Evakuierungsleitung (4) mit einer Eingangsöffnung (6), die in das Innere des Behälters mündet, ein Verschlussorgan (8), das über der Eingangsöffnung (6) angeordnet und zwischen einer Verschlussposition, in der das Verschlussorgan (8) die Eingangsöffnung (6) verschließt, und einer Freisetzungsposition beweglich ist, in der das Verschlussorgan (8) einen Durchgang durch die Eingangsöffnung (6) freigibt, und Antriebsmittel, die ausgelegt sind, um das Verschlussorgan (8) in die Freisetzungsposition zu verschieben, sobald ein Fluidniveau im Inneren des Behälters ein vorbestimmtes Schwellenniveau erreicht, **dadurch gekennzeichnet, dass**
die Antriebsmittel ein Auflageorgan (18) umfassen, das zwischen einer Antriebsposition, in der das Auflageorgan (18) gegen das Verschlussorgan (8) aufliegt, um das Verschlussorgan (8) in die Freisetzungsposition zu schwenken, und einer Ruheposition beweglich ist, in der das Auflageorgan (18) vom Verschlussorgan (8) entfernt ist,
wobei das Verschlussorgan (8) frei in der Ablasseinrichtung (1) montiert ist, um durch die Schwerkraft in die Verschlussposition zurückzukommen,
und dadurch, dass
das Verschlussorgan (8) einen Kopfteil (12) umfasst, gegen den das Auflageorgan (18) in der Antriebsposition ausgelegt ist, in Auflage zu kommen, und einen Basisteil (10), der gegen einen Anschlag (16) der Ablasseinrichtung (1) positioniert ist, um das Verschlussorgan (8) in die Freisetzungsposition schwenken zu lassen, wenn das Auflageorgan (18) in die Antriebsposition verschoben wird, wobei der Basisteil (10) einen höheren Querschnitt als denjenigen des Kopfteils (12) aufweist.

2. Einrichtung (1) nach Anspruch 1, wobei der Querschnitt des Basisteils (10) in der Richtung des Kopfteils (12) abnimmt.

3. Ablasseinrichtung (1) nach Anspruch 1 oder 2, wobei das Auflageorgan (18) beweglich in Rotation im Inneren des Behälters um eine Rotationsachse (A) montiert ist und die Antriebsmittel einen Schwimmer (22) umfassen, der an das Auflageorgan (18) befestigt ist.

4. Einrichtung (1) nach Anspruch 3, wobei die Rotationsachse (A) des Auflageorgans (18) senkrecht zum Verschlussorgan (8) positioniert ist.

5. Einrichtung (1) nach einem der Ansprüche 1 bis 4, wobei die Ablasseinrichtung (1) Anschlagmittel umfasst, die konfiguriert sind, um die Verschiebung des Auflageorgans (18) in die Antriebsposition zu begrenzen.

6. Einrichtung (1) nach einem der Ansprüche 1 bis 5, wobei das Auflageorgan (18) eine Aufnahme (30) begrenzt, in deren Inneren sich der Kopfteil (12) erstreckt.

7. Einrichtung (1) nach einem der Ansprüche 1 bis 6, wobei die Einrichtung (1) Dichtigkeitsmittel umfasst, die zwischen das Verschlussorgan (8) und die Eingangsöffnung (6) gestellt sind, und das Verschlussorgan (8) auf den Dichtigkeitsmitteln in der Verschlussposition liegt.

8. Einrichtung nach einem der Ansprüche 1 bis 7, wobei das Verschlussorgan (8) metallisch ist.

9. Pumpe, umfassend eine Ablasseinrichtung (1) nach einem der Ansprüche 1 bis 8.

## Claims

1. A purge device (1) comprising a container intended to contain a fluid, an evacuation pipe (4) having an inlet aperture (6) opening inside the container, a closure member (8) arranged above the inlet aperture (6) and movable between a closed position in which the closure member (8) closes off the inlet aperture (6) and a release position in which the closure member (8) releases a passage through the inlet aperture (6), and drive means intended to move the closure member (8) into the release position as soon as a fluid level inside the container reaches a predetermined threshold level, **characterized in that**
the drive means comprise a movable bearing member (18) between a driving position in which the bearing member (18) presses against the closure member (8) so as to switch the closure member (8) to the release position and a rest position in which the bearing member (18) is spaced from the closure member (8),
the closure member (8) being freely mounted in the purge device (1) so as to return to the closed position through gravity,
and **in that**
the closure member (8) comprises a head portion (12) against which is intended to bear the bearing member (18) in the driving position, and a base portion (10) positioned against an abutment (16) of the purge device (1), so as to switch the closure member (8) to the release position when the bearing member (18) is moved into the driving position, the base portion (10) having a cross-section greater than that of the head portion (12).

2. The purge device (1) according to claim 1, wherein the cross-section of the base portion (10) decreases in the direction of the head portion (12).

3. The purge device (1) according to claim 1 or 2, wherein the bearing member (18) is movably mounted in rotation inside the container about an axis of rotation (A) and the drive means comprise a float (22) attached to the bearing member (18).

4. The purge device (1) according to claim 3, wherein the axis of rotation (A) of the bearing member (18) is positioned vertically above the closure member (8).

5. The purge device (1) according to any of claims 1 to 4, wherein the purge device (1) comprises stop means configured to limit the displacement of the bearing member (18) in the driving position.

6. The purge device (1) according to any of claims 1 to 5, wherein the bearing member (18) delimits a housing (30) inside which the head portion (12) extends.

7. The purge device (1) according to any of claims 1 to 6, wherein the device (1) comprises sealing means interposed between the closure member (8) and the inlet aperture (6), and the closure member (8) rests on the sealing means in the closed position.

8. The purge device according to any of claims 1 to 7, wherein the closure member (8) is metallic.

9. A pump comprising a purge device (1) according to any of claims 1 to 8.
